# EUROPÄISCHE PATENTSCHRIFT

(11) **EP 1 624 166 B1**
(45) Veröffentlichungstag und Bekanntmachung des Hinweises auf die Patenterteilung: **18.07.2007**
(21) Anmeldenummer: 05104720.7
(22) Anmeldetag: 01.06.2005
(51) Int. Cl.: F01N 11/00, F01N 3/021, G01N 15/06, F01N 9/00

(54) **Verfahren zur Bewertung des Zustandes eines Partikelsensors**
Method for evaluating the condition of a particulate sensor
Procédé pour évaluer l'état d'un détecteur de particules

(30) Priorität: 27.07.2004 DE 102004036388
(43) Veröffentlichungstag der Anmeldung: 08.02.2006
(73) Patentinhaber: ROBERT BOSCH GMBH, 70442 Stuttgart (DE)
(72) Erfinder: Rösch, Sabine, 71254, Ditzingen (DE); Schaenzlin, Katharina, 71208, Rottenburg-Obernau (DE)

(56) Entgegenhaltungen:
- DE-A1- 10 133 384

## Beschreibung

### Stand der Technik

Die Erfindung betrifft zunächst ein Verfahren zur Bewertung des Zustandes eines Partikelsensors, bei dem die Beladung eines Abgasstroms mit Rußpartikeln erfasst wird, in dem die Leitfähigkeit zwischen zwei Elektroden eines dem Abgasstrom ausgesetzten Partikelsensors erfasst wird und bei dem der Partikelsensor zeitweise auf eine Temperatur erhitzt wird, bei der am Partikelsensor angelagerte Rußpartikel verbrennen (Regeneration).

Die Erfindung betrifft auch ein Computerprogramm, ein elektrisches Speichermedium für eine Steuer- und/oder Regeleinrichtung, eine Steuer- und/oder Regeleinrichtung, sowie eine Brennkraftmaschine.

Ein Verfahren der eingangs genannten Art ist aus der DE 101 33 385 C1 bekannt. Bei dem dort gezeigten Sensor ist eine Sammelkammer vorhanden, welche fluidisch mit einem Abgasstrom einer Brennkraftmaschine verbunden werden kann. An der Oberseite der sehr flachen Sammelkammer ist eine erste Elektrode angeordnet, an der Unterseite, also gegenüberliegend zu der ersten Elektrode, eine zweite Elektrode.

Die zwischen beiden Elektroden angeordnete Sammelkammer ist als Hohlraum ausgebildet. Im Betrieb des bekannten Partikelsensors gelangen Rußpartikel in die Sammelkammer und lagern sich in dem Hohlraum zwischen den beiden Elektroden ab. Hierdurch wird der Zwischenraum zwischen den beiden Elektroden elektrisch immer stärker überbrückt, so das sich die Impedanz der Elektrodenstruktur ändert. Die zeitliche Änderung der Impedanz ist ein Maß für die Beladung des Abgasstroms mit Rußteilchen.

Der bekannte Partikelsensor verfügt auch über eine Heizvorrichtung. Mittels dieser kann der Partikelsensor auf eine Temperatur zwischen 550°C bis 800°C erhitzt werden. Hierdurch wird eine exotherme Oxidationsreaktion bei den angelagerten Rußteilchen in Gang gesetzt, diese werden also verbrannt. Hierdurch wird der Partikelsensor von den angelagerten Rußpartikeln befreit, was auch als "Regenerieren" bezeichnet wird.

Aufgabe der vorliegenden Erfindung ist es, die Zuverlässigkeit im Betrieb des Partikelsensors zu erhöhen.

Diese Aufgabe wird bei einem Verfahren der eingangs genannten Art dadurch gelöst, dass die Leitfähigkeit zwischen den Elektroden des Partikelsensors mindestens während des Erhitzens erfasst und für eine Bewertung des Zustands des Partikelsensors verwendet wird.

### Vorteile der Erfindung

Bisher wurde die Leitfähigkeit zwischen den Elektroden des Partikelsensors nur außerhalb einer Regenerationsphase ausgewertet, um so die Beladung des Partikelsensors mit Rußpartikeln zu ermitteln. Erfindungsgemäß wird die Leitfähigkeit zwischen den Elektroden des Partikelsensors zusätzlich auch während des Erhitzens erfasst, denn es wurde erfindungemäß erkannt, dass die während des Erhitzens ermittelten Leitfähigkeitswerte ebenfalls zur Bestimmung mindestens einer Zustandsgröße des Partikelsensors herangezogen werden können. Dabei wird die Leitfähigkeit zwischen den beiden Elektroden des Partikelsensors während des Erhitzens durch physikalische Vorgänge beeinflusst, welche im normalen Betrieb des Partikelsensors nicht auftreten.

Diese zusätzlichen physikalischen Vorgänge liefern somit zusätzliche Informationen, die für die Bewertung des Zustands des Partikelsensors verwendet werden können. Eine Zustandsbewertung des Partikelsensors selbst erhöht jedoch die Betriebssicherheit und die Betriebszuverlässigkeit des Partikelsensors. Dabei wird unter dem Begriff des "Erhitzens" der gesamte Zeitraum verstanden, während dessen die Temperatur des Partikelsensors durch eine äußere Maßnahme, beispielsweise durch eine Heizeinrichtung, gegenüber dem Normalbetrieb erhöht wird.

Vorteilhafte Weiterbildungen des erfindungsgemäßen Verfahrens sind in Unteransprüchen angegeben.

Zunächst wird vorgeschlagen, dass eine während des Erhitzens auftretende maximale Leitfähigkeit wenigstens in etwa ermittelt wird, und dass aus der ermittelten maximalen Leitfähigkeit auf eine Beladung des Partikelsensors mit Rußpartikeln vor Beginn der Regeneration geschlossen wird.

Ein solches während eines Regenerationszeitraums beobachtetes Leitfähigkeitsmaximum kann verschiedene Ursachen haben. Beispielsweise kann es aufgrund der exothermen Reaktion bei der Verbrennung des Rußes zu einer kurzfristigen deutlichen Erhöhung der Temperatur des Partikelsensors kommen. Da die Leitfähigkeit der Grundmaterialien, aus denen Partikelsensoren üblicherweise hergestellt sind, mit der Temperatur zunimmt, führt eine solche deutliche Temperaturerhöhung auch zu einer entsprechenden Erhöhung der Leitfähigkeit. Je nach der Menge der angelagerten Rußpartikel wird sich dabei eine unterschiedliche Maximaltemperatur und somit auch eine entsprechend unterschiedliche Leitfähigkeit einstellen. Eine höhere maximale Leitfähigkeit lässt also auf eine entsprechend höhere Beladung mit Rußpartikeln vor Beginn der Regeneration schließen. Möglich ist auch, dass durch die Verbrennung Ionen generiert werden, die eine höhere Leitfähigkeit zwischen den beiden Elektroden des Partikelsensors ergeben. Letztlich wird hierdurch also ein zyklisch einsetzbares redundantes Verfahren zur Bestimmung der maximalen Beladung des Partikelsensors mit Rußpartikeln bereit gestellt.

In Weiterbildung hierzu wird vorgeschlagen, dass eine während des Erhitzens ermittelte Beladung mit einer vor der Regeneration im normalen Betrieb des Partikelsensors ermittelten Beladung verglichen und abhängig vom Ergebnis des Vergleichs ein im normalen Betrieb verwendetes Verfahren zur Bestimmung der Beladung adaptiert wird. Dabei geht man davon aus, dass es über die Lebenszeit eines Partikelsensors zu Ascheanlagerungen am Partikelsensor kommen kann, welche mit der Zeit, trotz Regenerationen, zu einer Drift der Leitfähigkeit zwischen den beiden Elektroden führen. Dies kann durch das erfindungsgemäße Verfahren kompensiert werden, was die Präzision des Partikelsensors in dessen Normalbetrieb erhöht.

Vor allem die vorgenannte Adaption ist dann besonders präzise, wenn für die Ermittlung der Beladung des Partikelsensors während des Erhitzens eine Differenz zwischen der erfassten maximalen Leitfähigkeit und einer unmittelbar vor Beginn des Regenerationszeitraums erfassten Leitfähigkeit verwendet wird. Weicht die unter Berücksichtigung der während des Regenerationszeitraums erfassten Leitfähigkeit ermittelte Beladung deutlich von der im normalen Betrieb vor der Regeneration vom Partikelsensor ermittelten Beladung ab, kann dies ein Anzeichen für einen Fehler des Partikelsensors sein, beispielsweise aufgrund zu starker Ascheanlagerungen. In diesem Fall erfolgt ein Eintrag in einen Fehlerspeicher, so dass beispielsweise bei einer Wartung der Brennkraftmaschine der Partikelsensor zielgerichtet und daher schnell und preisgünstig ausgetauscht werden kann. Alternativ oder zusätzlich kann man auch eine Signaladaptierung vornehmen, durch die die Abweichung kompensiert werden kann.

Besonders vorteilhaft ist es auch, wenn die während des Erhitzens erfasste Leitfähigkeit zur Steuerung und/oder Regelung der Regeneration verwendet wird. Hierdurch kann vor allem die sog. "Sensorblindzeit" reduziert werden, was im Umkehrschluss die normale Betriebszeit des Partikelsensors erhöht. Während der Regeneration kann nämlich mit Hilfe des hier verwendeten resistiven Anlagerungsprinzips die Konzentration von Rußpartikeln im Abgas der Brennkraftmaschine nicht erfasst werden. Dies bezeichnet man als "Sensorblindzeit". Da die Erfassung der Partikelkonzentration im Abgas für die korrekte Funktion der Brennkraftmaschine jedoch sehr wichtig, ist es erforderlich, die Sensorblindzeit möglichst kurz zu halten. Dies kann durch eine selbstgeregelte Regenerationsanpassung durch Auswertung der Leitfähigkeit des Partikelsensors während des Regenerationszeitraums erfolgen. Sobald die Leitfähigkeit auf ein normales und ggf. konstantes Maß zurückgegangen ist, kann das Erhitzen beendet werden.
In der Praxis kann der für die Regeneration erforderliche Zeitraum so auf ein Viertel der ursprünglichen Zeit reduziert werden.

Eine besonders bevorzugte Ausgestaltung des erfindungsgemäßen Verfahren zeichnet sich dadurch aus, dass mindestens zu einem Zeitpunkt, der nach dem Abfallen der Leitfähigkeit liegt, die aktuelle Leitfähigkeit erfasst wird, aus dieser aktuellen Leitfähigkeit ein Temperaturzustand des Partikelsensors ermittelt wird und dieser ermittelte Temperaturzustand mit einer mittels eines weiteren Sensors zum ungefähr gleichen Zeitpunkten erfassten oder für den ungefähr gleichen Zeitpunkt modellierten Temperatur verglichen wird. Dem liegt die Überlegung zugrunde, dass nach dem Abbrand der angelagerten Rußpartikel die Leitfähigkeit zwischen den beiden Elektronen im wesentlichen nur noch von der Leitfähigkeit des Trägermaterials herrührt, auf welches die Elektroden aufgebracht sind. Diese Leitfähigkeit hängt wiederum von der Temperatur ab, wobei der Zusammenhang zwischen Leitfähigkeit und Temperatur für übliche Materialien bekannt ist.

Aus der nach dem Abbrand der Rußpartikel festgestellten Leitfähigkeit kann somit auf einfache Art und Weise auf die Temperatur des Partikelsensors geschlossen werden. Diese Temperatur kann nun mit einer erfassten oder modellierten Temperatur verglichen werden, was ebenfalls Rückschlüsse auf den Zustand des Partikelsensors ermöglicht. Dieses Verfahren funktioniert also unabhängig von der während des Abbrennens der angelagerten Rußpartikel auftretenden Maximaltemperatur, was messtechnisch besonders einfach zu realisieren ist. Der weitere Sensor kann dabei in den Partikelsensor integriert sein, oder es kann sich um einen sonstigen Sensor handeln, mit dem beispielsweise die Temperatur des Abgases im Bereich des Partikelsensors erfasst wird. Möglich ist aber auch, aufgrund anderer Sensorsignale die Temperatur des Partikelsensors zu modellieren, so dass auf einen zusätzlichen Sensor verzichtet werden kann.

Kann die Leitfähigkeit zwischen den Elektroden des Partikelsensors mit ausreichend hoher Präzision erfasst werden, kann auch mit entsprechend hoher Präzision eine entsprechende Temperatur ermittelt werden. Ist dies nicht möglich, kann aus der Leitfähigkeit auch nur auf einen Temperaturbereich geschlossen werden und dieser mit einem erfassten oder modellierten Temperaturbereich verglichen werden. Dies wird vorliegend durch die Verwendung des Begriffs "Temperaturzustand" zum Ausdruck gebracht.

In Weiterbildung hierzu wird auch vorgeschlagen, dass der Vergleich zu einem ersten Zeitpunkt durchgeführt wird, zu dem der Partikelsensor noch erhitzt wird, und zu einem zweiten Zeitpunkt durchgeführt wird, der unmittelbar nach dem Ende des Erhitzens liegt. Nach dem Erhitzen liegt die Leitfähigkeit des Trägermaterials üblicherweise im Bereich von Null, dass heißt, dass das Trägermaterial im Normalbetrieb einen guten Isolator bildet. Als Trägermaterial wird üblicherweise ein Keramikmaterial verwendet. Aufgrund des Erhitzens kommt es jedoch auch bei vollständig abgebrannten Rußpartikeln zu einer starken Temperaturerhöhung des Trägermaterials, bei der dieses eine messbar erhöhte Leitfähigkeit aufweist. Durch das erfindungsgemäße Verfahren wird mittels des Partikelsensors eine Veränderung der Leitfähigkeit des Trägermaterials erfasst, was als zusätzliches Bewertungskriterium für die Funktionsfähigkeit des Partikelsensors herangezogen werden kann. Durch diese Maßnahme wird daher die Zuverlässigkeit der Funktionsprüfung verbessert.

In Weiterbildung hierzu wird vorgeschlagen, dass abhängig vom Ergebnis des Vergleichs ein Eintrag in einen Fehlerspeicher erfolgt. Weicht der erfasste bzw. modellierte Temperaturzustand des Partikelsensors nämlich deutlich von dem auf der Basis der Leitfähigkeit ermittelten Temperaturzustands des Partikelsensors ab, ist dies ein Hinweis auf einen Defekt oder eine unzulässige Ascheanlagerung. Durch einen Eintrag in einen Fehlerspeicher wird dem Wartungspersonal bei der Wartung der Brennkraftmaschine sofort ein Hinweis gegeben, den Partikelsensor auszutauschen, was die Wartungskosten senkt.

Bei einem Computerprogramm wird die eingangs genannte Aufgabe dadurch gelöst, dass es zur Anwendung in einem Verfahren der obigen Art programmiert ist. Bei einem elektrischen Speichermedium für eine Steuer- und/oder Regeleinrichtung einer Brennkraftmaschine wird die Aufgabe dadurch gelöst, dass auf ihm ein Computerprogramm zur Anwendung in einem Verfahren der obigen Art abgespeichert ist. Analog gilt für eine Steuer- und/oder Regeleinrichtung, dass sie zur Anwendung in einem Verfahren der obigen Art programmiert ist.

Bei der eingangs genannten Brennkraftmaschine wird die Aufgabe dadurch gelöst, dass die Steuer- und/oder Regeleinrichtung zur Anwendung in einem Verfahren der obigen Art programmiert ist.

### Zeichnungen

Nachfolgend besonders bevorzugte Ausführungsbeispiele der vorliegenden Erfindung unter Bezugnahme auf die beiliegende Zeichnung näher erläutert. In der Zeichnung zeigen:
- Figur 1: eine schematische Darstellung einer Brennkraftmaschine mit einem Partikelsensor;
- Figur 2: ein Diagramm, in dem der Verlauf einer Leitfähigkeit zwischen zwei Elektroden des Partikelsensors von Figur 1 während eines Abbrennens angelagerter Rußpartikel über der Zeit bei unterschiedlichen angelagerten Rußmengen aufgetragen ist;
- Figur 3: ein Flussdiagramm zur Erläuterung eines Verfahrens zur Zustandserfassung des Partikelsensors von Figur 1 während des in Figur 2 gezeigten Abbrennens von Rußpartikeln;
- Figur 4: ein Diagramm ähnlich Figur 2, welches zusätzlich einen Zeitraum nach dem Abbrennen der Rußpartikel sowie eine Temperatur des Partikelsensors von Figur 1 zeigt, und
- Figur 5: ein Flussdiagramm, welches ein Verfahren zur Zustandserkennung des Partikelsensors von Figur 1 während eines Zeitraums nach dem Abbrennen der Rußpartikel erläutert.

### Beschreibung der Ausführungsbeispiele

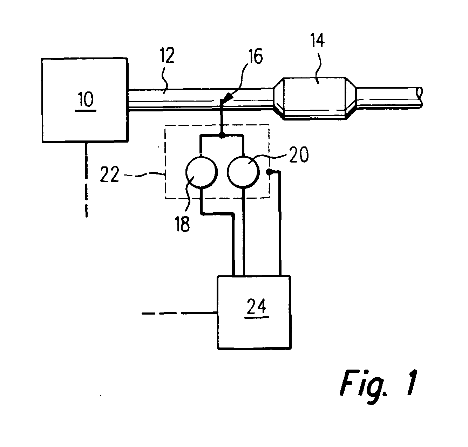

Eine Brennkraftmaschine ist in Figur 1 mit dem Bezugszeichen 10 bezeichnet. Verbrennungsabgase der Brennkraftmaschine werden über ein Abgasrohr 12 abgeleitet. In dem Abgasrohr 12 ist ein Partikelfilter 14 angeordnet, der Rußpartikel aus dem Abgasstrom herausfiltert. Stromaufwärts vom Partikelfilter 14 ist im Abgasrohr 12 eine Partikelsensor 16 angeordnet. Dieser umfasst im vorliegenden Ausführungsbeispiel zum Einen einen resistiven Sensor 18 und zum Anderen einen Temperatursensor 20.

Der resistive Sensor 18 umfasst zwei in der Figur nicht sichtbare Elektroden, die im vorliegenden Ausführungsbeispiel auf gegenüberliegenden Seiten einer Sammelkammer angeordnet sind. Die Sammelkammer ist wiederum mit dem Abgasrohr 12 fluidisch verbunden. Möglich ist auch, dass die beiden Elektroden einfach auf einer außen liegenden Oberfläche eines Trägermaterials angeordnet sind und interdigital ineinandergreifende Abschnitte aufweisen. Im normalen Betrieb lagern sich Rußpartikel an dem Partikelsensor 16 bzw. dem resistiven Sensor 18 an. Hierdurch wird der Zwischenraum zwischen den beiden Elektroden immer stärker überbrückt, was zu einer Änderung der Impedanz (oder, bei der Verwendung von Gleichstrom, einfach des elektrischen Widerstands) führt. Diese Änderung der Impedanz ist ein Maß für die Beladung des Abgasstroms mit Rußpartikeln.

Um die Funktionsfähigkeit des Partikelsensors 16 über einen längeren Zeitraum gewährleisten zu können, verfügt dieser auch über eine Heizeinrichtung, welche in Figur 1 nur gestrichelt angedeutet ist und das Bezugszeichen 22 trägt. Mittels dieser Heizeinrichtung 22 kann der gesamte Partikelsensor 16 auf eine Temperatur im Bereich zwischen 550°C und 800°C erhitzt werden. Hierdurch setzt bei den am Partikelsensor 16 angelagerten Rußpartikeln eine exotherme Reaktion ein, durch die die angelagerten Rußpartikel oxidieren bzw. abbrennen. Am Ende dieses auch als "Regeneration" bezeichneten Vorgangs ist der Partikelsensor 16 bzw. der resistive Sensor 18 wieder wenigstens im Wesentlichen frei von angelagerten Rußpartikeln.

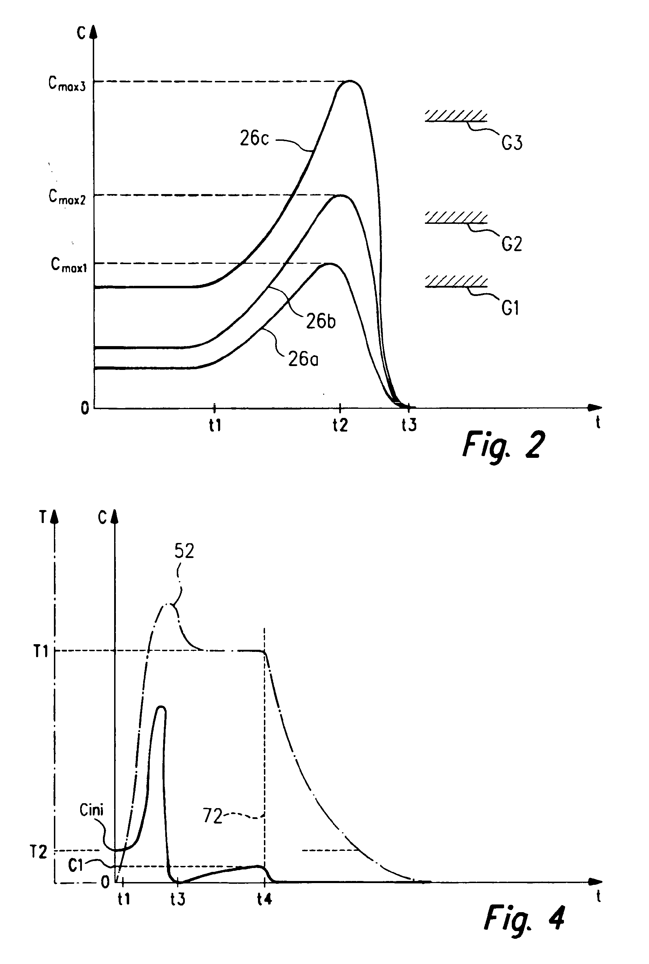

Während einer Regeneration und der exothermen Oxidation der angelagerten Rußpartikel wird, wie auch aus Figur 2 hervorgeht, eine Leitfähigkeit C zwischen den beiden Elektroden des resistiven Sensors 18 von einer Steuer- und Regeleinrichtung 24 erfasst. Dies kann kontinuierlich geschehen oder in sehr kurzen Zeitabständen, beispielsweise jede Sekunde oder jede halbe Sekunde. Eine Kurve 26a gibt in Figur 2 den Verlauf einer Leitfähigkeit zwischen den beiden Elektroden des resistiven Sensors 18 des Partikelsensors 16 an, wenn zu Beginn der Regeneration eine erste Rußpartikelmasse am Partikelsensor 16 anhaftet. Die Kurve 26b gilt für eine Rußpartikelmasse, welche höher ist als jene der Kurve 26a. Die Kurve 26c gilt wiederum für eine Rußpartikelmasse, die noch höher ist als jene der Kurve 26b. Die Erhitzung des Partikelsensors 16 mittels der Heizeinrichtung 22 beginnt zu einem Zeitpunk t1. Ungefähr zu einem Zeitpunkt t₂ werden aufgrund der exothermen Reaktion Leitfähigkeitsmaxima Cₘₐₓ₁, Cₘₐₓ₂ bzw. Cₘₐₓ₃ erhalten. Zu einem Zeitpunkt t₃ fällt die Temperatur wieder deutlich ab, was bedeutet, dass sämtliche am Partikelsensor 16 angelagerten Rußpartikel abgebrannt sind, dieser also wieder frei Rußpartikeln ist.

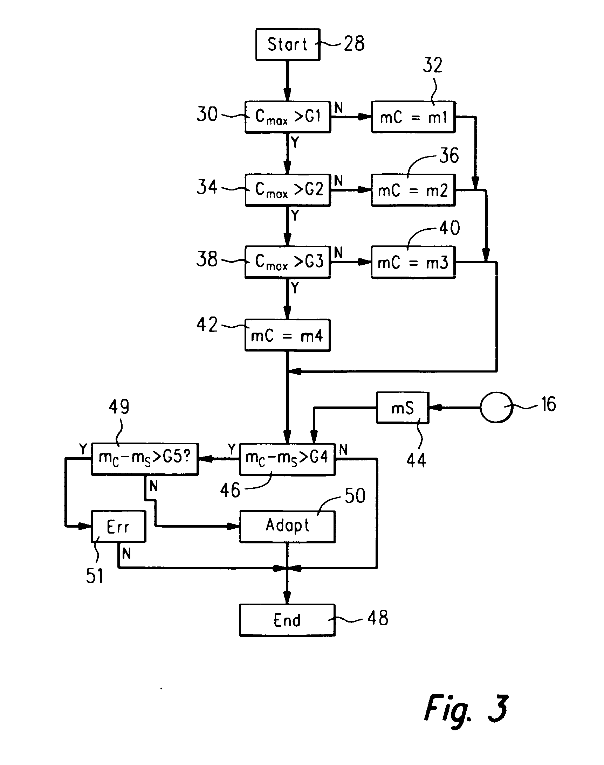

Über die Lebenszeit des Rußpartikelsensors 16 kann es zu Ascheanlegerungen kommen, welche eine Drift der im Normalbetrieb vom Partikelsensor 16 ermittelten Partikelbelastung des Abgases zur Folge hat. Ein mögliches und rein beispielhaft gezeigtes Verfahren, das als Computerprogramm auf einem Speicher der Steuer- und Regeleinrichtung 24 abgelegt ist und mit dem eine solche Drift erkannt und kompensiert werden kann, wird nun unter Bezugnahme auf Figur 3 erläutert:

Nach einem Startblock 28 wird in einem Block 30 geprüft, ob das während der Regeneration erfasste Leitfähigkeitsmaximum Cₘₐₓ größer ist als ein Grenzwert G1. Ist dies nicht der Fall, wird im Block 32 davon ausgegangen, dass eine vor der Regeneration an dem Partikelsensor 16 anhaftende Rußpartikelmasse m_{C} ungefähr einem Wert m1 entspricht. Ist die Antwort im Block 30 ja, wird im Block 34 abgefragt, ob das Leitfähigkeitsmaximum Cₘₐₓ größer ist als ein Grenzwert G2. Ist die Antwort im Block 34 nein, wird in einem Block 36 eine vor der Regeneration an dem Partikelsensor 16 anhaftende Rußpartikelmasse m_{C} gleich einem Wert m2 gesetzt. Ist die Antwort im Block 34 dagegen ja, wird im Block 38 abgefragt, ob das Leitfähigkeitsmaximum Cₘₐₓ größer ist als ein Grenzwert G3. Ist die Antwort im Block 38 nein, wird in einem Block 40 die vor der Regeneration am Partikelsensor 16 anhaftende Rußpartikelmasse m_{C} = m3 gesetzt. Andernfalls wird sie in einem Block 42 gleich einem Wert m4 gesetzt. Anstelle der Messung der Werte kann man die zu erwartenden Signalspitzen auch auf der Basis der vorhergehenden Messung der Signalhöhe abschätzen.

Es versteht sich, dass der Wert m4 betragsmäßig größer ist als der Wert m3, dieser wiederum größer ist als Wert m2 und dieser wiederum größer ist als der Wert m1. Die Kurven in Figur 2 entsprechen also Massewerten m2, m3, bzw. m4. Unmittelbar vor dem Beginn der Regeneration zum Zeitpunk t₁ wurde mittels des resistiven Sensors 18 durch eine Auswertung der Leitfähigkeit seit der letzten Regeneration eine am Partikelsensor 16 anhaftende Rußpartikelmasse m_{S} ermittelt (Block 44). In einem Block 46 wird die Differenz zwischen dem Wert m_{S} und dem Wert m_{C} gebildet und diese mit einem Grenzwert G4 verglichen. Ist die Differenz höchstens gleich dem Grenzwert G4, bedeutet dies, dass beide Vorgehensweise zu einem ähnlichen Ergebnis geführt haben somit der Partikelsensor 16 im Normalbetrieb ausreichend genaue Ergebnisse liefert. Daher wird in diesem Fall direkt vom Block 46 zu einem Endblock 48 gesprungen.

Ist die Differenz zwischen dem Wert m_{C} und dem Wert m_{S} dagegen größer als der Grenzwert G4, bedeutet dies, dass die unterschiedlichen Wege, mit denen die unmittelbar vor Beginn der Regeneration am Partikelsensor 16 anhaftenden Rußpartikelmasse m_{c} bzw. mₛ bestimmt wurden, auch zu deutlich unterschiedlichen Ergebnissen geführt haben. Nun wird in einem Block 49 geprüft, ob die Differenz zwischen m_{S} und m_{C} größer ist als ein Grenzwert G5. Ist die Antwort "nein", wird dies als eine Drift des Signals des resistiven Sensors 18 aufgrund von Ascheanlagerungen gewertet, was im Block 50 zu einer Adaption des Signals des resistiven Sensors 18 führt. Andernfalls erfolgt in 51 ein Eintrag in einen Fehlerspeicher Err.

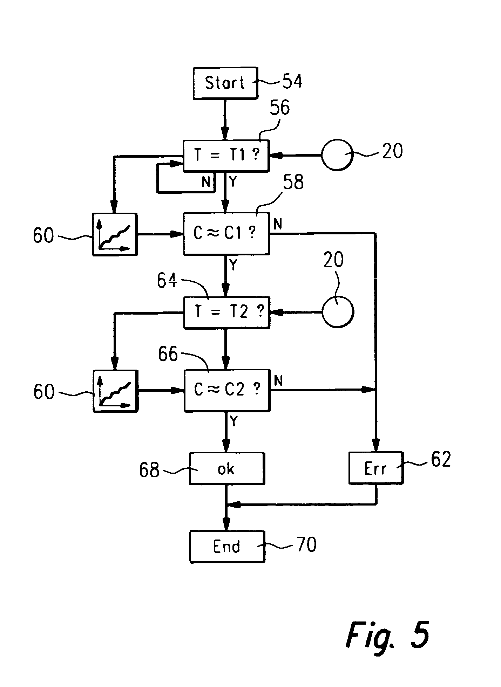

Eine weitere beispielhafte Möglichkeit zur Funktionsprüfung des Partikelsensors 16 ergibt sich aus den Figuren 4 und 5. In Figur 4 ist nicht nur der Zeitraum von t₁ bis t₃ aufgetragen, in dem die am Partikelsensor 16 angelagerten Rußpartikel verbrannt werden, sondern auch noch ein nach dem eigentlichen Abbrand der Rußpartikel anschließender Zeitraum.

Darüber hinaus ist eine Temperatur des Partikelsensors 16, die vom Temperatursensor 20 erfasst wird, strichpunktiert dargestellt. Die entsprechende Kurve trägt das Bezugszeichen 52. Man erkennt aus Figur 4, dass mittels des resistiven Sensors 18 auch nach dem Zeitpunkt t₃ eine erhöhte Leitfähigkeit zwischen den beiden Elektroden des resistiven Sensors 18 erfasst wird. Diese resultiert daher, dass auch in Abwesenheit von am Partikelsensor 16 angelagerten Rußpartikeln das Trägermaterial, auf welches die Elektroden aufgebracht sind und bei dem es sich üblicherweise um ein Keramikmaterial handelt, bei noch eingeschalteter Heizung 20 eine erhöhte Leitfähigkeit aufweist. Erst wenn die Heizung 20 zum Zeitpunkt t₄ abgeschaltet wird, sinkt auch die Leitfähigkeit des Trägermaterials wieder auf einen Wert im Bereich von Null ab. Dieser Sachverhalt wird gemäß dem in Figur 5 angegebenen Verfahren ebenfalls zur Prüfung des Funktionszustands des Partikelsensors 16 verwendet:

Nach einem Startblock 54 wird in einem Block 56 abgefragt, ob die vom Temperatursensor 20 erfasste Temperatur T ungefähr einem Wert T1 entspricht. Ist die Antwort im Block 56 nein, erfolgt ein Rücksprung in den Eingang des Blocks 56. Andernfalls wird in einem Block 58 abgefragt, ob die vom resistiven Sensor 18 erfasste Leitfähigkeit C ungefähr einem Wert C1 entspricht. Der Wert C1 wird dabei aus einer Kennlinie 60 ermittelt, in die die im Block 56 erfasste Temperatur T (die dem Wert T1 entspricht) eingespeist wird. Die Kennlinie 60 gibt den materialspezifischen Zusammenhang zwischen der Leitfähigkeit C und der Temperatur T des Trägermaterials an, auf dem die beiden Elektroden des resistiven Sensors 18 angeordnet sind. Ist die Antwort im Block 58 nein, bedeutet dies, dass die erfasste Leitfähigkeit C nicht der mittels der Kennlinie 60 bestimmten und aufgrund der Temperatur T1 erwarteten Leitfähigkeit C1 entspricht. Dies wird als Hinweis auf einen Defekt oder eine unzulässige Ascheanlagerung am Partikelsensor 16 gewertet und führt im Block 62 zu einem Eintrag in einen Fehlerspeicher.

Ist die Antwort im Block 58 dagegen ja, wird die Temperatur T, die vom Temperatursensor 20 erfasst wird, nach dem Abschalten der Heizung 22 des Partikelsensors 16 erfasst (Wert T2, Block 64). Dann wird in einem Block 66 abgefragt, ob die nun vom resistiven Sensor 18 erfasste Leitfähigkeit C wenigstens ungefähr einen Wert C2 aufweist, welcher wiederum mittels der Kennlinie 60 bestimmt wird, in die die im Block 64 ermittelte Temperatur T eingespeist wird. Ist die Antwort im Block 66 ja, bedeutet dies, dass bei beiden Temperaturen T1 und T2 die von den Elektroden erfasste Leitfähigkeit dem jeweils erwarteten Wert entsprach. Im Block 68 wird daher davon ausgegangen, dass der Partikelsensor 16 voll funktionsfähig ist. Das Verfahren endet dann in einem Endblock 70. Andernfalls, wenn die Abfrage in Block 66 das Ergebnis "nein" liefert, wird zum Block 62 gesprungen, in dem ein Eintrag in einen Fehlerspeicher erfolgt.

Wie aus Figur 4 hervorgeht, erfolgt der eigentliche Abbrand der am Partikelsensor 16 anhaftenden Rußpartikel nur während eines relativ kurzen Zeitraums zwischen den Zeitpunkten t₁ und t₃. Während dieses Zeitraums kann der Partikelsensor 16 nicht zur Erfassung der im Abgasstrom vorhandenen Rußpartikel verwendet werden. In dem die Leitfähigkeit C auch während dieses Zeitraums erfasst wird, kann erkannt werden, wann der eigentliche Abbrand der angelagerten Rußpartikel beendet ist und ab wann die erfasste Leitfähigkeit wieder für die Ermittlung der im Abgas vorhandenen Rußpartikel verwendet werden kann. Entsprechend kann die Heizeinrichtung 22 zum Zeitpunkt t₄ abgeschaltet werden (gestrichelte Linie 72 in Figur 4).

## Patentansprüche

1. Verfahren zur Bewertung des Zustandes eines Partikelsensors (16), bei dem die Beladung eines Abgasstroms mit Rußpartikeln erfasst wird, indem die Leitfähigkeit (C) zwischen zwei Elektroden eines dem Abgasstrom ausgesetzten Partikelsensors (16) erfasst wird, und bei dem der Partikelsensor (16) zeitweise auf eine Temperatur erhitzt wird, bei der am Partikelsensor (16) angelagerte Rußpartikel verbrennen **dadurch gekennzeichnet, dass** die Leitfähigkeit (C) zwischen den Elektroden des Partikelsensors (16) mindestens während des Erhitzens erfasst und für eine Bewertung des Zustands des Partikelsensors (16) verwendet wird.

2. Verfahren nach Anspruch 1, **dadurch gekennzeichnet, dass** eine während des Erhitzens auftretende maximale Leitfähigkeit (Cₘₐₓ) wenigstens in etwa ermittelt wird, und dass aus der ermittelten maximalen Leitfähigkeit (Cₘₐₓ) auf eine Beladung (m_{C}) des Partikelsensors (16) mit Rußpartikeln vor Beginn der Regeneration geschlossen wird.

3. Verfahren nach Anspruch 2, **dadurch gekennzeichnet, dass** eine während des Erhitzens ermittelte Beladung (m_{C}) mit einer vor der Regeneration im normalen Betrieb des Partikelsensors (16) ermittelten Beladung (m_{S}) verglichen und abhängig vom Ergebnis des Vergleichs ein im normalen Betrieb verwendetes Verfahren zur Bestimmung der Beladung adaptiert wird (50).

4. Verfahren nach einem der Ansprüche 2 oder 3, **dadurch gekennzeichnet, dass** für die Ermittlung der Beladung des Partikelsensors (16) während eines Regenerationszeitraums eine Differenz zwischen der erfassten maximalen Leitfähigkeit (Cₘₐₓ) und einer unmittelbar vor Beginn des Regenerationszeitraums erfassten Leitfähigkeit (Cᵢₙᵢ) verwendet wird.

5. Verfahren nach einem der Ansprüche 2 bis 4, **dadurch gekennzeichnet, dass** eine während des Regenerationszeitraums ermittelte Beladung (m_{C}) mit einer vor der Regeneration im normalen Betrieb des Partikelsensors ermittelten Beladung (m_{S}) verglichen wird, und dass abhängig vom Ergebnis des Vergleichs ein Eintrag in einen Fehlerspeicher erfolgt (51).

6. Verfahren nach einem der vorhergehenden Ansprüche, **dadurch gekennzeichnet, dass** die während des Regenerationszeitraums erfasste Leitfähigkeit (C) zur Steuerung und/oder Regelung der Regeneration verwendet wird.

7. Verfahren nach einem der vorhergehenden Ansprüche, **dadurch gekennzeichnet, dass** mindestens zu einem Zeitpunkt (t₅, t₆), der nach dem Abfallen der Leitfähigkeit liegt, die aktuelle Leitfähigkeit (C) erfasst wird, aus dieser aktuellen Leitfähigkeit (C) ein Temperaturzustand (T) des Partikelsensors (16) ermittelt wird, und dieser ermittelte Temperaturzustand (T) mit einem mittels eines weiteren Sensors (20) zum ungefähr gleichen Zeitpunkt (t₅, t₆) erfassten oder für den ungefähr gleichen Zeitpunkt modellierten Temperaturzustands verglichen wird (56, 64).

8. Verfahren nach Anspruch 7, **dadurch gekennzeichnet, dass** der Vergleich zu einem ersten Zeitpunkt (t₅) durchgeführt wird, zu dem der Partikelsensor noch erhitzt wird und zu einem zweiten Zeitpunkt (t₆) durchgeführt wird, der unmittelbar nach dem Ende des Erhitzens liegt.

9. Verfahren nach Anspruch 8, **dadurch gekennzeichnet, dass** abhängig vom Ergebnis des Vergleichs ein Eintrag in einen Fehlerspeicher erfolgt (62).

10. Computerprogramm, **dadurch gekennzeichnet, dass** es zur Anwendung in einem Verfahren nach einem der vorhergehenden Ansprüche programmiert ist.

11. Elektrisches Speichermedium für eine Steuer- und/oder Regeleinrichtung (24) einer Brennkraftmaschine (10), **dadurch gekennzeichnet, dass** auf ihm ein Computerprogramm zur Anwendung in einem Verfahren der Ansprüche 1 bis 9 abgespeichert ist.

12. Steuer- und/oder Regeleinrichtung (24) für eine Brennkraftmaschine (10), **dadurch gekennzeichnet, dass** sie zur Anwendung in einem Verfahren nach einem der Ansprüche 1 bis 9 programmiert ist.

13. Brennkraftmaschine (10), insbesondere für ein Kraftfahrzeug, mit einem Partikelsensor (16), der einem Abgasstrom der Brennkraftmaschine (10) ausgesetzt ist und zwei Elektroden aufweist, mit einer Heizeinrichtung (22), mit der der Partikelsensor (16) zeitweise auf eine Temperatur erhitzt werden kann, bei der am Partikelsensor (16) angelagerte Rußpartikel verbrennen, und mit einer Steuer- und/oder Regeleinrichtung (24), **dadurch gekennzeichnet, dass** die Steuer- und/oder Regeleinrichtung (24) zur Anwendung in einem Verfahren nach einem der Ansprüche 1 bis 9 programmiert ist.

## Claims

1. Method for evaluating the state of a particulate sensor (16), in which the loading of an exhaust gas stream with carbon particulates is sensed, in that the conductivity (C) between two electrodes of a particulate sensor (16) that is exposed to the exhaust gas stream is sensed, and in which the particulate sensor (16) is heated for a time to a temperature at which carbon particulates adsorbed on the particulate sensor (16) burn, **characterized in that** the conductivity (C) between the electrodes of the particulate sensor (16) is sensed at least during the heating and is used for evaluating the state of the particulate sensor (16).

2. Method according to Claim 1, **characterized in that** a maximum conductivity (Cₘₐₓ) occurring during the heating is determined at least approximately, and **in that** the determined maximum conductivity (Cₘₐₓ) is used to infer a loading (m_{c}) of the particulate sensor (16) with carbon particulates before the beginning of regeneration.

3. Method according to Claim 2, **characterized in that** a loading (m_{c}) determined during the heating is compared with a loading (mₛ) determined before regeneration in normal operation of the particulate sensor (16) and, depending on the result of the comparison, a method used in normal operation for determining the loading is adapted (50).

4. Method according to either of Claims 2 and 3, **characterized in that** a difference between the sensed maximum conductivity (Cₘₐₓ) and a conductivity (Cᵢₙᵢ) sensed directly before the beginning of a regeneration time period is used for the determination of the loading of the particulate sensor (16) during the regeneration time period.

5. Method according to one of Claims 2 to 4, **characterized in that** a loading (m_{c}) determined during the regeneration time period is compared with a loading (mₛ) determined before regeneration in normal operation of the particulate sensor, and **in that**, depending on the result of the comparison, an entry is made in a fault memory (51).

6. Method according to one of the preceding claims, **characterized in that** the conductivity (C) sensed during the regeneration time period is used for open-loop and/or closed-loop control of the regeneration.

7. Method according to one of the preceding claims, **characterized in that** the momentary conductivity (C) is sensed at least at a point in time (t₅, t₆) that lies after the drop in conductivity, this momentary conductivity (C) is used to determine a temperature state (T) of the particulate sensor (16), and this determined temperature state (T) is compared with a temperature state sensed by means of a further sensor (20) at approximately the same point in time (t₅, t₆) or modelled for the approximately same point in time (56, 64).

8. Method according to Claim 7, **characterized in that** the comparison is carried out at a first point in time (t₅), at which the particulate sensor is still being heated, and at a second point in time (t₆), which lies directly after the end of the heating.

9. Method according to Claim 8, **characterized in that**, depending on the result of the comparison, an entry in a fault memory is made (62).

10. Computer program, **characterized in that** it is programmed for use in a method according to one of the preceding claims.

11. Electric storage medium for an open-loop and/or closed-loop control device (24) of an internal combustion engine (10), **characterized in that** a computer program for use in a method of Claims 1 to 9 is stored on it.

12. Open-loop and/or closed-loop control device (24) for an internal combustion engine (10), **characterized in that** it is programmed for use in a method according to one of Claims 1 to 9.

13. Internal combustion engine (10), in particular for a motor vehicle, with a particulate sensor (16), which is exposed to an exhaust gas stream of the internal combustion engine (10) and has two electrodes, with a heating device (22), with which the particulate sensor (16) can be heated for a time to a temperature at which carbon particulates adsorbed on the particulate sensor (16) burn, and with an open-loop and/or closed-loop control device (24), **characterized in that** the open-loop and/or closed-loop control device (24) is programmed for use in a method according to one of Claims 1 to 9.

## Revendications

1. Procédé d'évaluation de l'état d'un détecteur de particules (16), selon lequel on saisit la charge d'un flux de gaz d'échappement en particules de suie en détectant la conductivité (C) entre deux électrodes d'un détecteur de particules (16) soumis au flux de gaz d'échappement, et en chauffant le détecteur de particules (16) temporairement à une température brûlant les particules de suie adhérant au détecteur de particules (16),
**caractérisé en ce qu'**
on saisit la conductivité (C) entre les électrodes du détecteur de particules (16) au moins pendant la mise en température et on l'utilise pour évaluer l'état du détecteur de particules (16).

2. Procédé selon la revendication 1,
**caractérisé en ce qu'**
on détermine, au moins approximativement, une conductivité maximale (Cₘₐₓ) apparaissant lors de la mise en température, et
on déduit de la conductivité maximale (Cₘₐₓ) déterminée, une charge (m_{C}) du détecteur de particules (16) en particules de suie avant le début de la régénération.

3. Procédé selon la revendication 2,
**caractérisé en ce qu'**
on compare une charge (m_{C}) déterminée pendant la mise en température à une charge (m_{S}) déterminée en mode normal du détecteur de particules (16) avant la régénération et on adapte, en fonction du résultat de la comparaison, un procédé utilisé en mode normal pour déterminer la charge (50).

4. Procédé selon l'une des revendications 2 ou 3,
**caractérisé en ce qu'**
on utilise une différence entre la conductivité maximale (Cₘₐₓ) saisie et une conductivité (Cᵢₙᵢ) saisie immédiatement avant le début de la période de régénération pour déterminer la charge du détecteur de particules (16) pendant une période de régénération.

5. Procédé selon l'une quelconque des revendications 2 à 4,
**caractérisé en ce qu'**
on compare une charge (m_{C}) déterminée pendant la période de régénération à une charge (m_{S}) déterminée en mode normal du détecteur de particules avant la régénération et
on enregistre dans une mémoire d'erreurs en fonction du résultat de la comparaison (51).

6. Procédé selon l'une des revendications précédentes,
**caractérisé en ce qu'**
on utilise la conductivité (C) saisie pendant la période de régénération pour commander et/ ou réguler la régénération.

7. Procédé selon l'une quelconque des revendications précédentes,
**caractérisé en ce qu'**
on détermine la conductivité (C) actuelle au moins à un instant (t₅, t₆), après la chute de la conductivité, on détermine à partir de cette conductivité (C) actuelle, un état de température (T) du détecteur de particules (16) et on compare cet état de température (T) déterminé à un autre état de température détecté approximativement au même instant (t₅, t₆) au moyen d'un autre détecteur (20) ou modélisé pour approximativement le même instant (56, 64).

8. Procédé selon la revendication 7,
**caractérisé en ce qu'**
on procède à la comparaison à un premier instant (t₅) auquel le détecteur de particules est encore mis en température et à un deuxième instant (t₆) immédiatement après la fin de la mise en température.

9. Procédé selon la revendication 8,
**caractérisé en ce qu'**
on enregistre dans une mémoire d'erreurs en fonction du résultat de la comparaison (62).

10. Programme informatique,
**caractérisé en ce qu'**
il est programmé pour appliquer un procédé selon l'une quelconque des revendications précédentes.

11. Support d'enregistrement électrique pour un dispositif de commande et/ou de régulation (24) d'un moteur à combustion interne (10),
**caractérisé en ce qu'**
un programme informatique appliquant un procédé selon les revendications 1 à 9 est sauvegardé sur ce support.

12. Dispositif de commande et/ou de régulation (24) d'un moteur à combustion interne (10),
**caractérisé en ce qu'**
il est programmé pour appliquer un procédé selon l'une quelconque des revendications 1 à 9.

13. Moteur à combustion interne (10), en particulier pour un véhicule automobile, comportant un détecteur de particules (16) exposé à un flux de gaz d'échappement du moteur à combustion interne (10) et présentant deux électrodes, un dispositif de chauffage (22) chauffant temporairement le détecteur de particules (16) à une température brûlant les particules de suie adhérant au détecteur de particules (16), et un dispositif de commande et/ou de régulation (24),
**caractérisé en ce que**
le dispositif de commande et/ou de régulation (24) est programmé pour appliquer un procédé selon l'un des revendications 1 à 9.
